Europäisches Patentamt

European Patent Office

Office européen des brevets

(11) Publication number: 0 246 369 B1

# EUROPEAN PATENT SPECIFICATION

(45) Date of publication of patent specification: **15.04.92**

(51) Int. Cl.⁵: **C09J  123/16**, C09J 123/20, C08L 23/16, C08L 23/20, //(C08L23/16,23:20),(C08L23/20, 23:16)

(21) Application number: **86303872.5**

(22) Date of filing: **21.05.86**

(54) **Butylene copolymer blend for form-and-fill film packaging.**

(43) Date of publication of application:
**25.11.87 Bulletin  87/48**

(45) Publication of the grant of the patent:
**15.04.92 Bulletin  92/16**

(84) Designated Contracting States:
**AT BE CH DE FR GB IT LI LU NL SE**

(56) References cited:
**WO-A-86/02595**
**FR-A- 2 438 601**
**GB-A- 2 033 838**
**US-A- 4 230 767**

(73) Proprietor: **SHELL OIL COMPANY**
**900, Louisiana**
**Houston Texas 77001(US)**

Proprietor: **MITSUI PETROCHEMICAL INDUS-TRIES, LTD.**
**2-5, Kasumigaseki 3-chome Chiyoda-ku**
**Tokyo 100(JP)**

(72) Inventor: **Hwo, Charles Chiu-Hsiung**
**2710, Sugarwood Drive**
**Sugarwood Texas(US)**
Inventor: **Kohyama, Masaki**
**c/o Mitsui Petrochemical Industries Ltd.**
**Tokyo(JP)**

(74) Representative: **Myerscough, Philip Boyd et al**
**J.A.Kemp & Co. 14, South Square Gray's Inn**
**London, WC1R 5EU(GB)**

Rank Xerox (UK) Business Services

## Description

The present invention relates to a polymer film having at least one surface layer or coating. More particularly, the invention relates to a packaging film having a polymer blend on one or both sides to give a sealing surface(s) which has excellent hot tack and heat sealability rendering it suitable for vertical and horizontal form-and-fill film packaging.

This invention addresses the unique problems associated with sealing vertical and horizontal form-and-fill packages. Packaging may be accomplished by filling with, for example, such items as foodstuffs or medical solutions, from a horizontal position where the item is inserted into the package from a side opening in the package. It is often desirable to fill a package from a vertical position, as when filling a bag with a free-flowing composition or with several items which would render a horizontal filling process cumbersome.

Form-and-fill film packaging requires good "hot tack" and it is desirable to have a low heat seal initiation temperature and broad seal temperature range. Hot tack may be defined as the bonding strength between two pieces of polymer film at the point immediately after they have been joined together by application of heat and while the polymer is in the semimolten/solidifying state. The vertical form-and-fill film packaging procedure requires a simultaneous sealing of the bottom seam of the package and filling of the package while the package is in a vertical position. Thus, the package is sealed by applying heat and the seal must attain sufficient strength to contain the filled materials while still hot, so that the material or product does not fall out the bottom seal. Not only does the weight of the material or product contribute to this tendency for the bottom seal to release, but in addition the pressure of air used to assist in transport of the product may exert an additional pressure against the seal.

In addition to good hot tack and a low and broad heat seal initiation temperature range, 1) a low coefficient of friction, 2) a high seal strength, and 3) good compatibility with other packaging materials are also important.

Heretofore, films for vertical and horizontal form-and-fill packaging have been deficient in one or more of these desired properties. A commonly used seal layer such a propylene-ethylene and copoymer melts at a high temperature relative to the main packaging film; i.e. it has a high and narrow seal temperature range. In this case packaging speeds are slower than desired, energy consumption is high and damage to the main package may occur if heat seal temperature is not very closely controlled. The metal salts of an ethylene acrylic acid copolymer have been used as alternative sealing materials but they have a poor coefficient of friction, and tend to stick on the forming mandrel during shaping of the package. The materials also have poor compatibility with other materials in the package so that reclaimability is poor.

According to the invention we provide a polymer film comprising a polypropylene or propylene-based copolymer or a blend thereof as a substrate or core layer bearing on one or both surfaces a layer of a polymer blend which comprises (i) a copolymer of butene-1 and propylene which has a propylene content of from 12 to 30% by weight, and (ii) a copolymer of propylene and ethylene which has an ethylene content of from 5 to 7% by weight, the weight ratio of (i):(ii) being from 40:60 to 75:25. Preferably the propylene content of (i) is from 15 to 25, especially about 20, % by weight, the ethylene content of (ii) about 6% by weight, and the weight ratio of (i):(ii) is from 60:40 to 70:30, especially about 65:35.

The polymer film of the invention has a seal coating on one or both sides which overcomes the disadvantages of known sealing coatings and exhibits all of the desired characteristics of a good seal coat. The blend of the present invention may be used advantageously for vertical form-and-fill film packaging (as well as for horizontal). The blend used as seal coating combines low, broad seal temperature range, and a low coefficient of friction not found in known seal layer compositions. The blend has good compatibility with other materials, particularly polypropylene, and has excellent seal strength. Most importantly and suprisingly, the blend additionally exhibits good hot tack over the low, broad heat seal initiation temperature range; a result that other polymer blends have heretofore failed to achieve.

For example, US-A-4,230,767 discloses a packaging material with heat seal packaging properties composed of blends of a propylene-ethylene copolymer with a variety of other propylene-olefin copolymers. The propylene-ethylene copolymers disclosed have an ethylene content of as low as 0.5 percent by weight and nowhere is there disclosed a film packaging material suitable for vertical as well as horizontal form and fill methods which exhibits good hot tack. Nor does this document disclose a film for vertical as well as horizontal form-and-fill packaging with a low and broad heat seal initiation temperature range.

We have surprisingly found that a butene-propylene copolymer can provide seal layers with a low, broad seal initiation temperature and, surprisingly, that blends of propylene-ethylene copolymers that have been aged at elevated temperatures (55°C, tested at one (1), seven (7) and fourteen (14) days) and which have a minimum ethylene content of 3.5% (not 0.5% as in US-A-4230767),yield seal coats having not only excellent hot tack, but hot tack results not heretofore achieved by the typical blends of US-A-4230767 or any other polymer blend which displays low, broad heat seal ranges for film. Applicants have found that the particular range of 5 to 7%, ethylene content in the aged propylene-ethylene copolymer is critical to the polymer blend of the butylene-propylene copolymer in order to yield a seal coat which possesses excellent hot tack, as well as a low and broad heat seal initiation temperature range.

The seal coatings may be used on one or both of the surfaces of films of propylene homopolymers, copolymers or propylene polymer blends.

Hot tack test and heat seal initiation temperature tests were performed initially using a butene-1-propylene copolymer with the properties outlined in Table 1 below.

## Table 1 – Butene-1-Propylene Copolymer Properties

| | |
|---|---|
| $C_3$ =, wt% by NMR | 19.8 |
| Melt index, g/10 minutes, ASTM D 1238 Condition "E" | 0.38 |
| Molecular weight, Mw | 716,000 |
| Mn | 145,000 |
| Mz | 2,140,000 |
| Melting Point (2nd Heat), °C (DSC, @ 10°C/min) | 75.5 |

This butene-propylene copolymer was blended with different propylene homopolymers and propylene-ethylene copolymers which were then coextruded into cast films with a propylene homopolymer substrate. The coating is coextruded onto polypropylene, which may or may not be biaxially oriented. The sealing and hot tack tests were conducted by setting a heat sealer at the desired dwell and pressure. Two seconds and 140kPa (20 psi) were used. The air pressure was pre-set for a certain number of cm of water via a regulator and column and a tubular specimen about 7.6 cm (3 inches) long and 7.6 cm (3 inches) flat was placed onto a shovel and one end of the tube sealed off by adhesive tape. The shovel was brought to the jaws of the heat sealer with the distance between the seal bar edge and the end of the shovel at 2.5 cm and a timer activated. The distance of the opening of the sealing portion immediately after the jaws opened was observed and then the air pressure was reset with a decrease in pressure and the subsequent steps followed until there was a maximum pressure (hot tack) that gave an equal to or less than 0.3 cm seal opening.

EXAMPLE 1

Table 2 shows heat seal initiation temperature (HSIT) and the hot tack strength of the butene-1-propylene copolymer blended with a propylene homopolymer and various propylene-ethylene copolymers, as well as those of a 100% propylene-ethylene commercial copolymer "Dypro" 431 as a standard. The copolymer were aged at 55°C for one (1), seven (7) and fourteen (14) days, each, and hot tack ratings determined at each of these aging times for each copolymer. The commercial propylene-ethylene copolymer used in coating packaging film, "Dypro" 431, was used as a standard. Millad in the amount of 0.2% by weight was added to improve clarity.

3

TABLE 2

| COATING BLENDS[1] | Hot Tack Strength[2] Temperature Range, °C | | | |
|---|---|---|---|---|
| | AS FABRICATED | AGED AT 55°C 1 DAY | AGED @ 55°C 7 DAYS | AGED @ 55°C 14 DAYS |
| 1 BP[3]) + 33% ARCO DYPRO 431 (3MF, 5% $C_2^=$) | EXCELLENT (87-138) | GOOD (110-138) | GOOD (126-138) | GOOD (126-138) |
| 2 BP + 40% ARCO DYPRO 431 (3MF, 5% $C_2^=$) | EXCELLENT (82-138) | EXCELLENT (117-138) | GOOD (121-138) | GOOD (121-138) |
| 3 BP + 40% SHELL PP DX6018 (2MF, 3.2% $C_2^=$) | EXCELLENT (104-138) | FAIR | -- | -- |
| 4 BP + 40% SHELL PP WRS 6-118 (10MF, 3.2% $C_2^=$) | GOOD (99-138) | FAIR | -- | -- |
| 5 BP + 40% SHELL PP DX6016 (4MF, 3.5% $C_2^=$) | EXCELLENT (92-138) | GOOD (99-138) | GOOD (115-138) | FAIR |
| 6 BP + 40% SHELL WRS 6-135 (2MF, 2.5% $C_2^=$) | EXCELLENT (99-138) | FAIR | POOR | -- |
| 7 BP + 40% SHELL PP 5384 (1MF, 0% $C_2^=$) | FAIR | POOR | -- | -- |

1) Coating blends were applied on substrate of Shell DX 5096 by coextrusion and casting. Total film thickness = 32 μm (1.25 mils). Coating Thickness = 5 to 11.4 μm (0.2 to 0.45 mil). All films tested were as fabricated and room temperature aged for at least 24 hours.
2) Requirement above 25 cm (10ins) water pressure to be satisfactory.
3) BP: A butene-1-propylene copolymer as identified in Table 1.

As may be seen from Table 2, Formulation No. 6 which contained 2.5% ethylene exhibited excellent hot tack strength at the time of fabrication but only fair hot tack strength after aging at 55°C for only one (1) day. The hot tack strength was poor after seven (7) days.

It may be desirable to add film processing aids and end use enhancement materials to the film. These may be added without inhibiting the hot tack and heat seal initiation temperature range results.

4

**Claims**

1. A polymer film comprising a polypropylene or propylene-based copolymer or a blend thereof as a substrate or core layer bearing on one or both surfaces a layer of a polymer blend which comprises (i) a copolymer of butene-1 and propylene which has a propylene content of from 12 to 30% by weight, and (ii) a copolymer of propylene and ethylene which has an ethylene content of from 5 to 7% by weight, the weight ratio of (i):(ii) being from 40:60 to 75:25.

2. A polymer film according to claim 1, wherein the propylene content of (i) is from 15 to 25% by weight and the weight ratio of (i):(ii) is from 40:60 to 70:30.

3. A polymer film according to claim 1, wherein the propylene content of (i) is about 20% by weight, the ethylene content of (ii) is about 6% by weight, and the weight ratio of (i):(ii) is about 65:35.

4. A polymer film according to claim 1, 2 or 3 wherein the or each surface layer has a hot tack range of from 93 to 143°C (200 to 290°F) and a heat seal initiation temperature of from 82 to 143°C (180 to 290°F).

**Revendications**

1. Film de polymère comprenant, comme substrat ou couche centrale, un polypropylène ou un copolymère à base de propylène ou un mélange de tels polymères, ledit substrat portant, sur une face ou sur les deux faces, une couche d'un mélange de polymères qui comprend (i) un copolymère de butène-1 et de propylène, ayant une teneur en propylène de 12 à 30 % en poids, et (ii) un copolymère de propylène et d'éthylène, ayant une teneur en éthylène de 5 à 7 % en poids, le rapport en poids (i):(ii) étant de 40:60 à 75:25.

2. Film de polymère selon la revendication 1, dans lequel la teneur en propylène de (i) est de 15 à 25 % en poids et le rapport en poids (i):(ii) est de 40:60 à 70:30.

3. Film de polymère selon la revendication 1, dans lequel la teneur en propylène de (i) est d'environ 20 % en poids, la teneur en éthylène de (ii) est d'environ 6 % en poids et le rapport en poids (i):(ii) est d'environ 65:35.

4. Film de polymère selon la revendication 1, 2 ou 3, dans lequel la couche à la surface ou chaque couche à la surface a un domaine d'adhésivité à chaud de 93 à 143°C (200 à 290°F) et une température de déclenchement de thermosoudage de 82 à 143°C (180 à 290°F).

**Patentansprüche**

1. Polymerfolie, umfassend ein Polypropylen oder ein Copolymer auf der Basis von Polypropylen oder ein Gemisch daraus als Substrat oder Kernschicht, das/die auf einer oder beiden Seiten eine Schicht aus einem Polymergemisch umfaßt, das umfaßt (i) ein Copolymer aus Buten-1 und Propylen mit einem Propylengehalt von 12 bis 30 Gew.-%, und (ii) ein Copolymer aus Propylen und Ethylen mit einem Ethylengehalt von 5 bis 7 Gew.-%, wobei das Gewichtsverhältnis von (i):(ii) 40:60 bis 75:25 beträgt.

2. Polymerfolie nach Anspruch 1, wobei der Propylengehalt von (i) 15 bis 25 Gew.-% und das Gewichtsverhältnis (i):(ii) 40:60 bis 70:30 beträgt.

3. Polymerfolie nach Anspruch 1, wobei der Propylengehalt von (i) etwa 20 Gew.-%, der Ethylengehalt von (ii) etwa 6 Gew.-% und das Gewichtsverhältnis von (i):(ii) etwa 65:35 beträgt.

4. Polymerfolie nach Anspruch 1, 2 oder 3, wobei die oder jede Oberflächenschicht einen Heißklebrigkeitsbereich von 93 bis 143°C (200 bis 290°F) und eine Temperatur des beginnenden Heißsiegelns von 82 bis 143°C (180 bis 290°F) aufweist.